# EUROPÄISCHE PATENTSCHRIFT

(11) **EP 1 332 182 B1**
(45) Veröffentlichungstag und Bekanntmachung des Hinweises auf die Patenterteilung: **23.06.2004**
(21) Anmeldenummer: 01985719.2
(22) Anmeldetag: 25.09.2001
(51) Int. Cl.: C09B 67/00, D06P 5/00, C09D 11/00

(54) **VERFAHREN ZUR HERSTELLUNG VON POLYMERUMHÜLLTEN PIGMENTTEILCHEN DURCH PRÄZIPITATION**
METHOD FOR PRODUCING POLYMER COATED PIGMENT PARTICLES BY PRECIPITATION
PROCEDE DE PREPARATION DE PARTICULES DE PIGMENT A ENROBAGE POLYMERE PAR PRECIPITATION

(30) Priorität: 26.09.2000 DE 10047622
(43) Veröffentlichungstag der Anmeldung: 06.08.2003
(73) Patentinhaber: BASF AKTIENGESELLSCHAFT, 67056 Ludwigshafen (DE)
(72) Erfinder: AUWETER, Helmut, 67117 Limburgerhof (DE); BOHN, Heribert, 67319 Wattenheim (DE); MÄCHTLE, Walter, 67067 Ludwigshafen (DE); MIELKE, Manfred, 69118 Heidelberg (DE); SENS, Rüdiger, 67069 Ludwigshafen (DE); SIEMENSMEYER, Karl, 67227 Frankenthal (DE)
(74) Vertreter: Pohl, Michael, Dr.
(86) Internationale Anmeldenummer: PCT/EP2001/011079
(87) Internationale Veröffentlichungsnummer: WO 2002/026892

(56) Entgegenhaltungen:
- WO-A-99/51695
- DE-A- 19 845 078
- US-A- 4 725 522
- US-A- 5 049 322
- US-A- 5 270 445

## Beschreibung

Die vorliegende Erfindung betrifft ein Verfahren zur Herstellung von polymerumhüllten Pigmentteilchen, die so hergestellten Pigmentzubereitungen sowie deren Verwendung.

Pigmente und Dispersionsfarbstoffe sind wichtige wasserunlösliche Farbmittel. Zum Erzielen einer optimalen Farbstärke und Brillanz ist ihr Vorliegen in kolloid-disperser Form bei geringer Teilchengröße und enger Teilchengrößeverteilung häufig erforderlich. Die Pigmente und Dispersionsfarbstoffe müssen gegen Agglomeration und Flockung stabilisert werden. Besonders wichtig ist die kolloid-disperse Verteilung beispielsweise beim Ink-Jet-Druck, einem weitverbreiteten Verfahren zum kontaktlosen Bedrucken von verschiedenen Printmedien.

Die WO 99/51695 beschreibt präzipitierte, wasserunlösliche Farbstoffe in kolloid-disperser Form mit einer mittleren Teilchengröße von 5 nm bis 1 µm und mit einer Varianz von weniger als 50 %. Das Ausfällen der Farbstoffpartikel in kolloid-disperser Form erfolgt durch Zugabe von Wasser zu der Lösung des Farbstoffes in einem Lösemittel. Dabei enthält das Wasser vorzugsweise ein Schutzkolloid, d.h. ein wasserlösliches natürliches oder synthetisches Homo- oder Copolymer.

Die DE 198 45 078 A1 betrifft farbstoffhaltige Polymerpartikel, die in einer Matrix eines im Wesentlichen wasserunlöslichen Polymers mindestens einen Farbstoff enthalten und eine mittlere Teilchengröße im Bereich von 5 bis 500 nm und eine Breite der Teilchengrößeverteilung (Varianz) von ≤ 35 % aufweisen. Man fällt die farbstoffhaltigen Polymerpartikel aus einer Lösung, die in einem mit Wasser mischbaren organischen Lösungsmittel den Farbstoff und ein wasserunlösliches Polymer enthält.

Die WO 99/40123 offenbart ein Verfahren zur Herstellung Farbstoff enthaltender wässriger Polymerisatdispersionen durch radikalische, wässrige Emulsionspolymerisation ethylenisch ungesättigter Monomere, wobei man wenigstens einen Teil der Monomere in Form einer Ö1-in-Wasser-Emulsion einsetzt, deren disperse Phase wenigstens einen öllöslichen Farbstoff enthält, und im Wesentlichen von farbstoffhaltigen Monomertröpfchen mit einem Durchmesser von weniger als 500 nm gebildet wird.

Alle vorstehend erwähnten Veröffentlichungen beschreiben Verfahren unter Verwendung von Dispersionsfarbstoffen bzw. öllöslichen Farbstoffen. Es hat sich gezeigt, dass die gemäß dem vorstehenden Stand der Technik hergestellten Färbemittel nachteiligerweise nicht ausreichend lichtecht und migrationsstabil sind. Die Migration von Farbstoffen stellt insbesondere beim Bedrucken von Textilien aufgrund des unterschiedlichen Aufziehvermögens der verschiedenen Farbstoffe auf verschiedene Geweben, besonders Mischgewebe, ein Problem dar.

Die US 4,665,107 betrifft ein Verfahren zur Modifizierung von Pigmentteilchen durch Verkapseln mit polymeren Ausgangsmaterialien. Dabei wird eine homogene Dispersion, bestehend aus primären Pigmentteilchen und Polymer in einem kaum oder nicht mit Wasser mischbaren organischen Lösungsmittel, in Wasser dispergiert, wobei sich eine Emulsion bildet. Durch anschließendes Abdestillieren des Lösungsmittels werden aus den Emulsionströpfchen feste Teilchen gebildet. Dieses Verfahren ist insofern nachteilig, als die feine Verteilung einer Flüssigkeit in einer anderen - auch bei Mitverwendung von Emulgatoren - technisch sehr aufwendig ist. Die dispergierten Tröpfchen haben außerdem das Bestreben zu koaleszieren, da erst durch das Abdestillieren des Lösungsmittels die verkapselten Pigmentteilchen entstehen. Zudem sind in der Regel mehr als ein Pigmentteilchen im Emulsionströpfchen und im daraus erhaltenen Färbemittelteilchen enthalten. Für optimale Brillanz und Farbstärke sollte möglichst nur ein Pigmentteilchen verkapselt sein.

Der vorliegenden Erfindung liegt somit die Aufgabe zugrunde, ein einfaches Verfahren zur Herstellung von lichtechten, wasserechten und migrationsstabilen Farbmittelzubereitungen mit kolloid-dispersen Farbmitteln und vorzugsweise enger Teilchengröße zur Verfügung zu stellen.

Die Aufgabe wurde gelöst durch ein Verfahren, bei dem man feinteilige Pigmente mit Polymeren umhüllt, indem man das Polymer in Gegenwart fein verteilter Pigmentteilchen aus einer Lösung fällt. Pigmente weisen hervorragende Lichtechtheit und Migrationsstabilität auf.

Die Erfindung betrifft ein Verfahren zur Herstellung von polymerumhüllten Pigmentteilchen, bei dem man in Gegenwart fein verteilter Pigmentteilchen eine Lösung eines Polymers in einem ersten Lösungsmittel mit einem zweiten Lösungsmittel mischt, in dem das Polymer nicht oder kaum löslich ist und das mit dem ersten Lösungsmittel mischbar ist.

Die Pigmentteilchen können vor dem Vermischen fein verteilt in der Lösung des Polymers in dem ersten Lösungsmittel und/oder fein verteilt in dem zweiten Lösungsmittel vorliegen. Alternativ können die Pigmentteilchen als Dispersion, deren Dispersionsmedium z.B. mit dem ersten Lösungsmittel identisch ist, vorgelegt werden.

Das Verfahren läßt sich sowohl kontinuierlich als auch diskontinuierlich durchführen. Das Vermischen erfolgt vorzugsweise unter turbulenten Bedingungen. Geeignete Vorrichtungen zum Vermischen, insbesondere zum turbulenten Vermischen zweier Flüssigkeiten sind dem Fachmann bekannt, wie beispielsweise Rührkessel, Y- oder T-Rohre, die gegebenenfalls mit statischen Mischern versehen sind, oder Mischdüsen.

Die Wahl des ersten Lösungsmittels richtet sich nach der Löslichkeit des verwendeten Polymers. Das erste Lösungsmittel ist vorzugsweise ein mit Wasser mischbares, organisches Lösungsmittel.
Zu den mit Wasser mischbaren Lösungsmitteln zählen auch solche Lösungsmittel, die Mischungslücken mit Wasser aufweisen. In diesen Fällen werden die Mengenverhältnisse so gewählt, dass Mischbarkeit vorliegt. Im Allgemeinen sollten sie zu mindestens 10 Gew.-% mit Wasser mischbar sein. Beispiele für geeignete Lösungsmittel sind Mono- und Polyalkohole wie Methanol, Ethanol, n-Propanol, Isopropanol, Glykol, Glycerin, Propylenglykol, Polyethylenglykol; weiterhin Ether wie Tetrahydrofuran, Dioxan, 1,2-Propandiol-1-n-propylether, 1,2-Butandiol-1-methylether, Ethylenglykolmonomethylether, Diethylenglykolmonomethylether; Ester wie Essigsäuremethylester, Monoester von Ethylenglykol oder Propylenglykolen mit Essigsäure, Butyrolacton; Ketone wie Aceton oder Methylethylketon; Amide wie Formamid, Dimethylformamid, Dimethylacetamid, N-Methylpyrrolidon und Hexamethylphosphorsäuretriamid; Sulfoxide und Sulfone wie Dimethylsulfoxid und Sulfolan; Alkancarbonsäuren wie Ameisensäure oder Essigsäure.

Besonders bevorzugte erste Lösungsmittel sind Methanol, Aceton, Tetrahydrofuran und Dimethylformamid.

Das zweite Lösungsmittel ist vorzugsweise Wasser.

Im Einzelfall kann es sich sowohl bei dem ersten als auch bei dem zweiten Lösungsmittel um organische Lösungsmittel handeln, z.B. Toluol oder Cyclohexan als erstes Lösungsmittel und Methanol oder Diisopropylether als zweites Lösungsmittel.

Das Gewichtsverhältnis von erstem Lösungsmittel zu zweitem Lösungsmittel liegt im Allgemeinen im Bereich von 2:1 bis 1:50, insbesondere im Bereich von 1:4 bis 1:10. Wenn das zweite Lösungsmittel Wasser ist, wird es in der Regel im Überschuss bezogen auf das erste Lösungsmittel eingesetzt. Falls es erwünscht ist, kann man den pH-Wert der wässrigen Phase auf einen gewünschten Wert einstellen.

Das Lösen des Polymers sowie das Vermischen der wässrigen Phase mit der organischen Lösemittelphase erfolgt üblicherweise bei Raumtemperatur bis Siedepunkt des Lösungsmittels. Vorzugsweise führt man die Reaktion drucklos durch, wobei aber auch ein Arbeiten unter Druck möglich ist.

Als Pigmente eignen sich sowohl feinverteilte organische als auch anorganische Pigmente sowie Gemische davon.

Geeignete anorganische Pigmente sind:
- Weißpigmente
   wie Titandioxid (C.I. Pigment White 6), Zinkweiß, Farbenzinkoxid; Bleiweiß; Zinksulfid, Lithopone;
- Schwarzpigmente
   wie Ruß (C.I. Pigment Black 7); Eisen-Mangan-Schwarz, Spinellschwarz (C.I. Pigment Black 27), Eisenoxidschwarz (C.I. Pigment Black 11);
- Buntpigmente
   wie Chromoxid, Chromoxidhydratgrün; Chromgrün (C.I. Pigment Green 48); Cobaltgrün (C.I. Pigment Green 50); Ultramaringrün; Kobaltblau (C.I. Pigment Blue 28 und 36); Ultramarinblau; Eisenblau (C.I. Pigment Blue 27); Manganblau; Ultramarinviolett; Kobalt- und Manganviolett; Eisenoxidrot (C.I. Pigment Red 101); Cadmiumsulfoselenid (C.I. Pigment Red 108); Molybdatrot (C.I. Pigment Red 104); Ultramarinrot; Eisenoxidbraun, Mischbraun, Spinell-und Korundphasen (C.I. Pigment Brown 24, 29 und 31), Chromorange; Eisenoxidgelb (C.I. Pigment Yellow 42); Nickeltitangelb (C.I. Pigment Yellow 53); C.I. Pigment Yellow 157 und 164; Chromtitangelb; Cadmiumsulfid und Cadmiumzinksulfid (C.I. Pigment Yellow 37 und 35); Chromgelb (C.I. Pigment Yellow 34), Zinkgelb, Erdalkalichromate, Neapelgelb; Bismutvanadat (C.I. Pigment Yellow 184);
- Interferenzpigmente
   Metalleffektpigmente, Perlglanzpigmente.
- Füllstoffe und/oder Mattierungsstoffe
   wie SiO₂ (Aerosil R 812,), präzipitiertes CaCO₃;
- Magnetpigmente
   wie CrO₂, Fe₂O₃, Fe₃O₄, Co-modifizierte Eisenoxide, Ba-Ferrite, Reineisenpigmente;

Geeignete organische Pigmente aus der Colour Index Liste sind:
- Monoazopigmente
   C.I. Pigment Brown 25;
   C.I. Pigment Orange 5, 13, 36 und 67;
   C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 251, 112, 146, 170, 184, 210 und 245;
   C.I.Pigment Yellow 1, 3, 73, 74, 65, 97, 151 und 183.
- Diazopigmente
   C.I. Pigment Orange 16, 34 und 44;
   C.I. Pigment Red 144, 166, 214 und 242;
   C.I. Pigment Yellow 12, 13, 14, 16, 17, 81, 83, 106, 113, 126, 127, 155, 174, 176 und 188;
- Anthanthronpigmente
   C.I. Pigmente Red 168 (C.I. Vat Orange 3);
- Anthrachinonpigmente
   C.I. Pigment Yellow 147 und 177;
   C.I. Pigment Violet 31;
- Anthrapyrimidinpigmente
   C.I. Pigment Yellow 108 (C.I. Vat Yellow 20);
- Chinacridonpigmente
   C.I. Pigment Red 122, 202 und 206 C.I.Pigment Violet 19;
- Chinophthalonpigmente
   C.I. Pigment Yellow 138;
- Dioxazinpigmente
   C.I. Pigment Violet 23 und 37;
- Flavanthronpigmente
   C.I. Pigment Yellow 24 (C.I. Vat Yellow 1);
- Indanthronpigmente
   C.I. Pigment Blue 60 (C.I. Vat Blue 4) und 64 (C.I. Vat Blue 6);
- Isoindolinpigmente
   C.I. Pigment Orange 69; C.I. Pigment Red 260; C.I. Pigment Yellow 139 und 185;
- Isoindolinonpigmente
   C.I. Pigment Orange 61; C:I. Pigment Red 257 und 260;
   C.I.Pigment Yellow 109, 110, 173 und 185;
- Isoviolanthronpigmente
   C.I. Pigment Violet 31 (C.I. Vat Violet 1);
- Metallkomplexpigmente
   C.I. Pigment Yellow 117 und 153; C.I. Pigment Green 8;
- Perinonpigmente
   C.I.Pigment Orange 43 (C.I. Vat Orange 7); C.I.Pigment Red 194 (C.I. Vat Red 15);
- Perylenpigmente
   C.I. Pigment Black 31 und 32; C.I. Pigment Red 123, 149, 178, 179 (C.I.Vat Red 23), 190 (C.I. Vat Red 29) und 224; C.I. Pigment Violet 29;
- Phthalocyaninpigmente
   C.I. Pigment Blue 15, 15:1, 15:2, 15:3, 15:4, 15:6 und 16;
   C.I. Pigment Green 7 und 36;
- Pyranthronpigmente
   C.I. Pigment Orange 51, C.I. Pigment Red 216 (C.I. Vat Orange 4);
- Thioindigopigmente
   C.I. Pigment Red 88 und 181 (C.I. Vat Red 1); C.I. Pigment Violet 38 (C.I. Vat Violet 3);
- Triarylcarboniumpigmente
   C.I. Pigment Blue 1, 61 und 62; C.I. Pigment Green 1; C.I. Pigment Red 81, 81:1 und 169; C.I. Pigment Violet 1, 2, 3 und 27;
- C.I. Pigment Black 1 (Anilinschwarz);
- C.I. Pigment Yellow 101 (Aldazingelb);
- C.I. Pigment Brown 22;

Küpenfarbstoffe (außer den bereits oben genannten):
- C.I. Vat Yellow 2, 3, 4, 5, 9, 10, 12, 22, 26, 33, 37, 46, 48, 49 und 50;
- C.I. Vat Orange 1, 2, 5, 9, 11, 13, 15, 19, 26, 29, 30 und 31;
- C.I. Vat Red 2, 10, 12, 13, 14, 16, 19, 21, 31, 32, 37, 41, 51, 52 und 61;
- C.I. Vat Violet 2, 9, 13, 14, 15, 17 und 21;
- C.I. Vat Blue 1 (C.I. Pigment Blue 66), 3, 5, 10, 12, 13, 14, 16, 17, 18, 19, 20, 22, 25, 26, 29, 30, 31, 35, 41, 42, 43, 64, 65, 66, 72 und 74;
- C.I.Vat Green 1, 2, 3, 5, 7, 8, 9, 13, 14, 17, 26, 29, 30, 31, 32, 33, 40, 42, 43, 44 und 49;
- C.I. Vat Brown 1, 3, 4, 5, 6, 9, 11, 17, 25, 32, 33, 35, 38, 39, 41, 42, 44, 45, 49, 50, 55, 57, 68, 72, 73, 80, 81, 82, 83 und 84;
- C.I. Vat Black 1, 2, 7, 8, 9, 13, 14, 16, 19, 20, 22, 25, 27, 28, 29, 30, 31, 32, 34, 36, 56, 57, 58, 63, 64 und 65.

Als bevorzugte Pigmente sind SiO₂ (Aerosil), Pigment Blau 15:4, Pigment Blau 15:3, Pigment Rot 122 und Pigment Yellow 138 zu nennen.

Das Pigment sollte möglichst feinteilig sein. Vorzugsweise haben die Pigmentteilchen eine Teilchengröße ≤ 1 µm, insbesondere im Bereich von 0,01 µm bis 0,5 µm.

Das Gewichtsverhältnis von Pigmentteilchen zur gesamten Menge an erstem und zweiten Lösungsmittel beträgt üblicherweise 1:20 bis 1:10 000, vorzugsweise etwa 1:1000 bis 1:5000.

Das erfindungsgemäße Verfahren zeichnet sich durch die Vielzahl der einsetzbaren Polymere aus. Man kann auch Gemische von Polymeren verwenden. Die thermischen Eigenschaften, wie die Glasübergangstemperatur oder der Schmelzpunkt, die mechanischen und optischen Eigenschaften, wie der Brechungsindex, der Teilchen lassen sich optimal dem Anwendungszweck anpassen. Durch geeignete Wahl des Polymers können die Oberflächen der Pigmentteilchen modifiziert werden, insbesondere hydrophilisiert oder hydrophobisiert.

Das oder die Polymere müssen im ersten Lösungsmittel löslich, im zweiten Lösungsmittel kaum oder gar nicht löslich sein. Im Allgemeinen ist das Polymer zu weniger als 1 g/L im zweiten Lösungsmittel löslich, um die Verluste an Polymer möglichst gering zu halten. Üblicherweise beträgt dessen Löslichkeit im ersten Lösungsmittel mindestens 10 g/L, um die Flüssigkeitsvolumina gering zu halten. Die Konzentration des im ersten Lösungsmittel-gelösten Polymers beträgt üblicherweise etwa 10 g/L bis 40 g/L, insbesondere 10 g/L bis 25 g/L. Unter einem Polymer soll vorliegend auch ein Gemisch verschiedener Polymere verstanden werden.
Das Polymer wird beim turbulenten Mischen der zwei Lösungsmittel durch Überschreiten seiner Löslichkeit direkt ausgefällt. Überwiegend oder vollständig wird es auf die Pigmentteilchen präzipitiert und verkapselt diese effektiv.

Geeignete Polymere sind einerseits Polyester. Sie lassen sich in einfacher Weise durch Kondensationspolymerisation aliphatischer, cycloaliphatischer und aromatischer Di-, Tri- und/oder Polycarbonsäuren bzw. derer funktioneller Derivate wie Anhydride oder Chloride mit Di-, Tri- und/oder Polyolen herstellen. Geeignete Carbonsäuren sind z.B. Dicarbonsäuren mit 2 bis 20 Kohlenstoffatomen, vorzugsweise 4 bis 15 Kohlenstoffatomen, beispielsweise Malonsäure, Bernsteinsäure, Glutarsäure, Adipinsäure, Pimelinsäure, Korksäure, Sebacinsäure, Dodecandisäure, Phthalsäure, Terephthalsäure, Isophthalsäure, Cyclohexandicarbonsäure etc. Geeignet sind auch Sulfobernsteinsäure und Sulfoisophthalsäure. Die Dicarbonsäuren können einzeln oder als Gemische eingesetzt werden. Geeignete Diole sind z. B. Glykole, bevorzugt Glykole mit 2 bis 25 Kohlenstoffatomen. Beispiele für geeignete Glykole sind z. B. 1,2-Ethandiol, 1,3-Propandiol, 1,4-Butandiol, 1,5-Pentandiol, 1,6-Hexandiol, 1,10-Decandiol, Diethylenglykol, 2,2,4-Trimethylpentandiol-1,5, 2,2-Dimethylpropandiol-1,3, 1,4-Dimethylolcyclohexan, 1,6-Dimethylolcyclohexan und ethoxilierte/propoxilierte Produkte des 2,2-Bis-(4-hydroxyphenyl)-propan (Bisphenol-A), etc. Verzweigte und vernetzte Polyester entstehen bei der Polykondensation von drei- oder mehrwertigen Alkoholen mit polyfunktionellen Carbonsäuren. Geeignete Triole und Polyole weisen z. B. 3 bis 25, bevorzugt 3 bis 18 Kohlenstoffatome auf. Dazu zählen z. B. Glycerin, Trimethylolpropan, Erythrit, Pentaerythrit, Sorbit und deren Alkoxilate etc.

Die Polykondensation von Hydroxycarbonsäuren oder Lactonen führt zu Polyestern vom Hydroxycarbonsäure-Typ. Diese bestehen nur aus einem Monomeren, den Hydroxycarbonsäuren. Geeignete Hydroxycarbonsäuren sind a-Hydroxycarbonsäuren wie Glykolsäure, Milchsäure, Hydroxybuttersäure, Mandelsäure, die auch in Form ihrer Lactide vorliegen können oder β-Hydroxycarbonsäuren, γ-Hydroxycarbonsäuren, δ-Hydroxycarbonsäuren bzw. ω-Hydroxycarbonsäuren. Als Lactone für die Herstellung der Polyesterole eignen sich z.B. solche mit 3 bis 20 Kohlenstoffatomen, wie α,α-Dimethyl-β-propiolacton, γ-Butyrolacton, ε-Caprolacton usw.

Als Polyester sind weiterhin Polycarbonate geeignet, die Polyester der Kohlensäure mit Hydroxyverbindungen sind. Ihre Eigenschaften lassen sich in der Synthese durch geeignete Wahl der Dihydroxyverbindung, die aliphatisch oder aromatisch oder ein Gemisch davon sein kann, in weiten Bereichen variieren. Ein besonders geeignetes Polycarbonat ist Lexan 141, das von GE Plastics vertrieben wird.

Geeignete Polymere sind auch Polyvinylacetale, wie Polyvinylformale oder Polyvinylbutyrale, die durch Umsetzung von Polyvinylalkohol mit Aldehyden wie Formaldehyd oder Butyraldehyd erhältlich sind, sowie Polyacetale, wie insbesondere Polyoxymethylen.

Ferner sind Polyurethane und Polyharnstoffe brauchbare Polymere für das erfindungsgemäße Verfahren. Diese entstehen z.B. bei der Polyaddition von Diolen bzw. Diaminen mit Diisocyanaten. Geeignete Diisocyanate sind beispielsweise Diisocyanate wie Hexamethylendiisocyanat, Isophorondiisocyanat, Phenylen-1,4-diisocyanat, Naphthylen-1,5-diisocyanat, oder Toluylen-2,4- bzw. -2,6-diisocyanat. Das Diol kann niedermolekular wie beispielsweise Ethylenglykol, Propylenglykol, 1,4-Butylenglykol usw. oder polymer wie beispielsweise ein Polyester- oder Polyetherdiol sein.

Als Polymere eignen sich auch Homo- oder Copolymere ethylenisch ungesättigter Monomere. Bei den Copolymeren kann es sich um statistische Copolymere, Blockcopolymere, Pfropfcopolymere und dergleichen handeln. Geeignet sind Polymere, die aus 10 bis 100 Gew.-%, vorzugsweise 20 bis 90 Gew.-% eines oder mehrerer wasserunlöslicher ethylenisch ungesättigter Monomere, 0 bis 90 Gew.-%, vorzugsweise 5 bis 80 Gew.-% eines oder mehrerer wasserlöslicher ethylenisch ungesättigter Monomere und 0 bis 30 Gew.-%, vorzugsweise 2 bis 20 Gew.-% eines oder mehrerer vernetzender Monomere bestehen.

Geeignete wasserunlösliche ethylenisch ungesättigte Monomere sind:
i) Ester von α,β-ethylenisch ungesättigten C₃-C₈-Monocarbonsäuren und C₄-C₈-Dicarbonsäuxen mit C₁-C₁₂-Alkanolen, insbesondere C₁-C₈-Alkanolen. Beispiele für diese Mono- und Dicarbonsäuren sind Acrylsäure, Methacrylsäure, Crotonsäure, Maleinsäure, Fumarsäure, Itaconsäure und Citraconsäure, wobei Acrylsäure und Methacrylsäure bevorzugt sind. Beispiele für C₁-C₁₂-Alkanole sind Methanol, Ethanol, n-Propanol, i-Propanol, n-Butanol, i-Butanol, sec-Butanol, t-Butanol, 2-Ethylhexanol, n-Octanol und n-Dodecanol. Bevorzugte Ester sind Methylmethacrylat, n-Butylacrylat und 2-Ethylhexylacrylat;
ii) Vinylester von C₁-C₁₂-Monocarbonsäuren, insbesondere C₁-C₈-Monocarbonsäuren. Beispiele für Vinylester sind vinylacetat, Vinylpropionat, Vinylbutyrat, Vinylhexanoat und Vinyldecanoat;
iii) vinylaromatische Verbindungen, wie Styrol und α-Methylstyrol;
iv) C₂-C₆-Olefinen, wie Ethylen, Propen, 1-Buten, 2-Buten und Isobuten oder Diolefine mit konjugierten Doppelbindungen, wie Butadien oder Isopren.
v) Acrylnitril, Methacrylnitril; Vinylether von C₁-C₈-Alkanolen, insbesondere Vinylethylether.

Brauchbare wasserlösliche ethylenisch ungesättigte Monomere sind Monomere mit polaren Gruppen, d.h. anionische Monomere, kationische Monomere und nichtionische Monomere. Sie weisen in der Regel eine Wasserlöslichkeit von wenigstens 5 g/L bei 25 °C auf. Als wasserlöslich wird ein Monomer auch bezeichnet, wenn seine ionisierte, d.h. protonierte bzw. deprotonierte, Form das angegebene Löslichkeitskriterium erfüllt.

Anionische Monomere sind vorzugsweise ausgewählt unter:
i) α,β-ethylenisch ungesättigten C₃-C₈-Monocarbonsäuren und C₄-C₈-Dicarbonsäuren und den Halbestern mit C₁-C₁₂-Alkanolen und den Anhydriden davon. Beispiele für diese Carbonsäuren sind oben als Säurekomponente der Ester angegeben. Acrylsäure und Methacrylsäure sind bevorzugt;
ii) aromatischen Vinylcarbonsäuren, wie 2-, 3- oder 4-Vinylbenzoesäure;
iii) monoethylenisch ungesättigten Sulfon- und Phosphonsäuren, wie Vinylsulfonsäure, Allylsulfonsäure, vinylbenzolsulfonsäure, Vinylphosphonsäure.

Besonders bevorzugte anionische Monomere sind Acrylsäure, Methacrylsäure und Vinylsulfonsäure.

Bei den kationischen Monomeren handelt es sich um ethylenisch ungesättigte, stickstoffbasische Verbindungen. Bevorzugt sind Ester der oben beschriebenen α,β-ethylenisch ungesättigten C₃-C₈-Monocarbonsäuren mit Amino-C₂-C₈-alkanolen, Mono-C₁-C₄-alkylamino-C₂-C₈-alkanolen oder Di-C₁-C₄-alkylamino-C₂-C₈-alkanolen, N-Vinylimidazole und 2-, 3- oder 4-Vinylpyridine und die durch Alkylierung mit Alkylhalogeniden, Dialkylsulfaten und Alkylenoxiden erhaltenen quaternären Formen davon.

Bevorzugte nichtionische, wasserlösliche Monomere sind N-Vinyllactame, insbesondere N-Vinylpyrrolidon, Ester α,β-ethylenisch ungesättigter C₃-C₈-Monocarbonsäuren mit C₂-C₄-Alkandiolen und die ethoxylierten oder propoxylierten Derivate davon, Amide, Mono-C₁-C₄-alkylamide und Di-C₁-C₄-alkylamide der oben aufgeführten α,β-ethylenisch ungesättigten C₃-C₈-Monocarbonsäuren, vorzugsweise Acrylamid und Methacrylamid.

Bei den vernetzenden Monomeren handelt es sich um polyfunktionelle Monomere, die zwei oder mehrere nichtkonjugierte, ethylenisch ungesättigte Bindungen aufweisen oder die neben der ethylenisch ungesättigten Bindung eine Alkoxy-, Hydroxy- oder N-Al-kylolgruppe enthalten. Beispiele hierfür sind die Diester zweiwertiger Alkohole mit den oben genannten ethylenisch ungesättigten Monocarbonsäuren, die Vinyl- und Allylester der ethylenisch ungesättigten Carbonsäuren oder Divinylaromaten, insbesondere Ethylenglykoldiacrylat, 1,4-Butylenglykoldiacrylat, Propylenglykoldiacrylat, Vinylmethacrylat, Allylacrylat und Divinylbenzol. Beispiele für polyfunktionelle Monomere sind die N-Hydroxyalkylund N-Alkylolamide der genannten ethylenisch ungesättigten Carbonsäuren sowie Glycidylacrylat und Glycidylmethacrylat.

Geeignete Beispiele von Homo- oder Copolymeren ethylenisch ungesättigter Monomere sind Polystyrol und Copolymere des Styrols wie ASA, SAN, ABS; ein Terpolymer von Styrol, Acrylsäure und 4-Vinylpyridin; Polyvinylacetat sowie Polymethylmethacrylat.

Das Mengenverhältnis von Pigment zu Polymer liegt im Allgemeinen im Bereich von 1:0,1 bis 1:10 Gew.-Teilen, vorzugsweise 1:0,5 bis 1:7 Gew.-Teilen.

Das erste und/oder das zweite Lösungsmittel enthalten vorzugsweise einen Emulgator und/oder ein Schutzkolloid. Sie können ferner übliche Hilfsstoffe wie Feuchthaltemittel, Konservierungsmittel enthalten. Alternativ kann man die Dispersion der polymerumhüllten Pigmentteilchen auch in einem oder mehreren nachgeschalteten verfahrensschritten damit versetzen. Der nachgeschaltete Verfahrensschritt kann sowohl kontinuierlich als auch diskontinierlich erfolgen.

Vorzugsweise enthält das zweite Lösungsmittel, insbesondere wenn es sich dabei um Wasser handelt, wenigstens ein Schutzkolloid. Die Gegenwart des Schutzkolloids sorgt für eine Langzeitstabilisierung, indem es das Agglomerieren der kolloid-dispersen Teilchen unterbindet. Mit Vorteil enthalten das erste und/oder zweite Lösungsmittel außerdem wenigstens einen Emulgator.

Als Schutzkolloide kommen die zu diesem Zweck üblicherweise verwendeten natürlichen oder halbsynthetischen Polymere zur Anwendung. Brauchbare natürliche oder halbsynthetische Schutzkolloide sind beispielweise Gelatine, Fischgelatine, Stärke oder Stärkederivate, wie Dextrine, Pektin, Gummi arabicum, Casein, Caseinat, Alginate, Cellulosse und Cellulosederivate wie Methylcellulose, Carboxymethylcellulose, Hydroxypropylcellulose oder Hydroxyproylmethylcellulose. Insbesondere verwendet man Natriumcaseinat.

Brauchbare synthetische Schutzkolloide sind wasserlösliche Homooder Copolymere, wobei es sich um Neutralpolymere, kationische Polymere und anionische Polymere handeln kann. Auch Komplexe aus polykationischen und polyanionischen Polymeren sowie Coazervate kommen in Betracht.

Die Schutzkolloid-Polymere sind aufgebaut aus Monomeren mit hydrophilen Gruppen und gegebenenfalls Comonomeren mit hydrophoben Gruppen, wobei das Verhältnis zwischen hydrophilen und hydrophoben Gruppen so gewählt ist, dass das Copolymer wasserlöslich ist.

Geeignete hydrophile Monomere sind beispielsweise N-Vinyllactame, wie N-Vinylpyrrolidon; Acrylamid oder Methacrylamid und deren N-C₁-C₄-Mono- oder N,N-Di-C₁-C₄-alkylderivate; Acrylsäure oder Methacrylsäure; Monomere mit einem primären, sekundären oder tertiären basischen Stickstoffatom wie Amino-C₂-C₄-alkylacrylate und -methacrylate, wie beispielsweise Dimethylaminoethyl(meth)acrylat, und die mit C₁-C₄-Alkylierungsmitteln quaternisierten Derivate davon; ethylenisch ungesättigte Sulfonsäuren wie Vinylsulfonsäure, Acrylamido-N-propansulfonsäure und Styrolsulfonsäure; Hydroxy-C₂-C₄-alkylacrylate und -methacrylate; Allylalkohol und Methallylalkohol; olefinisch ungesättigte Verbindungen mit Epoxygruppen wie Glycidylacrylat und Glycidylmethacrylat; Monoester und Diester von ethylenisch ungesättigten C₄-C₈-Dicarbonsäuren wie Maleinsäure und Itaconsäure, mit Aminoalkoholen wie Dimethylaminoethanol; und Amide oder Imide dieser Carbonsäuren mit Diaminen wie Dimethylaminopropylamin.

Geeignete Comonomere mit hydrophoben Gruppen sind beispielsweise C₂-C₄-Alkylvinylether wie Ethylvinylether; Vinylester von C₂-C₈-Carbonsäuren wie Vinylacetat und Vinylpropionat; C₁-C₈-Alkylacrylate und -methacrylate wie Methyl-, Ethyl-, n-Butyl- und 2-Ethylhexylacrylat und -methacrylat; vinylaromatische Verbindungen wie Styrol; und 1-Olefine mit bis zu 20 Kohlenstoffatomen wie Ethylen; Propylen und Isobutylen.

Die Menge an Schutzkolloid im zweiten Lösungsmittel liegt im Allgemeinen im Bereich von 1 bis 50 Gew.-%, vorzugsweise 3 bis 30 Gew.-%, bezogen auf das Gesamtgewicht der jeweiligen Phase.

Emulgatoren sind Hilfsmittel zur Stabilisierung. Man bezeichnet sie auch als grenzflächenaktive Stoffe oder Tenside. Als Emulgatoren kommen übliche für die Herstellung von Emulsionen geeignete Emulgatoren zur Anwendung. Die Emulgatoren können anionischer, kationischer oder nichtionischer Natur sein. Anionische sind beispielsweise Seifen, Alkansulfonate, Olefinsulfonate, Alkylarylsulfonate, Alkylnaphthalinsulfonate, Sulfosuccinate, Alkylsulfate und Alkylethersulfate, Alkylmethylestersulfonate, Acylglutamate, Sarkosinate und Taurate. Beispiele sind Natriumlaurylsulfat, Natriumlaurylethersulfat, Oleylsulfonat, Nonylbenzolsulfonat, Natriumdodecylbenzolsulfonat und Butylnaphthalinsulfonat.

Kationische Emulgatoren sind beispielsweise Alkyltrimethylammonium-Halogenide/Alkylsulfate, Alkylpyridinium-Halogenide und Dialkyldimethylammonium-Halogenide/Alkylsulfate.

Geeignete nicht-ionische Emulgatoren sind beispielsweise alkoxylierte tierische/pflanzliche Fette und Öle, z. B. Maisölethoxylate, Rizinusölethoxylate, Talgfettethoxylate; Glycerinester, z. B. Glycerinmonostearat; Fettalkoholalkoxylate und Oxoalkoholalkoxylate; Alkylphenolalkoxylate, z. B. Isononylphenolethoxylate; und Zuckertenside, z. B. Sorbitanfettsäureester (Sorbitanmonooleat, Sorbitantristearat), Polyoxyethylensorbitanfettsäureester.

Geeignet sind auch zwitterionische Emulgatoren, wie Sulfobetaine, Carboxybetaine, Alkyldimethylaminoxide, z. B. Tetradecyldimethylaminoxid, und Polymertenside, wie Di-, Tri- und Multi-Blockpolymere vom Typ (AB)x, ABA und BAB, z. B. Polyethylenoxid-block-polypropylenoxid, Polystyrol-block-polyethylenoxid, und AB-Kammpolymere, z. B. Polymethacrylat-comb-polyethylenoxid.

Ein brauchbarer Emulgator ist ferner das ethoxylierte und sulfonierte Bisphenol-A-Adukkt an Styrol.

Eine weitere Klasse geeigneter Emulgatoren sind Fluortenside. Ihre hydrophobe Gruppe ist ein Fluor- oder Perfluoralkylrest, insbesondere, ein C₈-C₂₂-Perfluoralkylrest. Sie enthalten ferner eine hydrophile Gruppe, meist eine Carboxylat-, Sulfonat- oder Sulfatgruppe. Sie sind bereits in äußerst geringen Konzentrationen, die deutlich niedriger sind als bei herkömmlichen Tensiden, wirksam. Zudem zeichnen sie sich durch eine hohe chemische und thermische Stabilität aus. Bevorzugt verwendet man das von der Firma Bayer vertriebene Fluortensid Bayowet FT 448.

Die Menge an Emulgator im ersten und/oder zweiten Lösungsmittel liegt im Allgemeinen im Bereich von 10 bis 500 Gew.-%, vorzugsweise 50 bis 200 Gew.-%, bezogen auf das Gesamtgewicht des eingesetzten Pigments.

Vorzugsweise enthält die wässrige Phase ein Feuchthaltemittel wie 1,2-Propandiol oder Glycerin.

Vorzugsweise enthält die wässrige Phase ein Konservierungsmittel wie beispielsweise eine 1,2-Benzisothiazolin-Verbindung.

Man verwendet die gemäß dem erfindungsgemäßen Verfahren erhaltene Pigmentdispersion entweder direkt oder versieht sie mit den in solchen Fällen üblichen Hilfs- und Zusatzstoffen, soweit diese nicht bereits vor der Fällung im ersten und/oder zweiten Lösungsmittel gelöst worden waren. Übliche Hilf- und Zusatzstoffe sind beispielsweise Additive zur Viskositätseinstellung wie wasserlösliche Stärke- und Cellulosederivate als Verdickungsmittel.

Alternativ kann man die Farbmittelzubereitung in üblicher Weise beispielsweise durch Abziehen des ersten Lösungsmittels und gegebenenfalls eines Teils des zweiten Lösungsmittels einengen. Die flüchtigen Bestandteile können auch vollständig entfernt werden, beispielsweise durch Sprühtrocknung. Man erhält die erfindungsgemäßen Farbstoffe in Form eines Trockenpulvers, das z.B. in Wasser redispergiert werden kann. Vor oder während der Aufkonzentration kann eventuell weiteres Schutzkolloid zugegeben werden, um eine noch bessere kolloide Stabilisierung zu erzielen.

Die polymerumhüllten Pigmentteilchen weisen in der Regel eine mittlere Teilchengröße im Bereich von 10 nm bis 5 µm und eine Breite der Teilchengröße (Varianz) von ≤ 60 % auf. Die Teilchengröße wird geeigneterweise mit quasielastischer Lichtstreuung gemessen, und die Auswertung erfolgte nach der Kumulantenmethode (siehe Bruce, J. Berne und Robert Pecora, "Dynamic Light Scattering", John Wiley & Sons Inc. 1976, S. 196). vorzugsweise liegt die mittlere Teilchengröße im Bereich von 5 nm bis 1 µm und die Breite der Teilchengrößenverteilung ist vorzugsweise ≤ 50 %.

Aufgrund des Herstellungsverfahrens enthält das polymerumhüllte Pigmentteilchen in der Regel nur ein Pigmentteilchen als Kern. Das Pigment dient als Keim, auf den das Polymer aufgefällt wird.

Gegenstand der Erfindung ist auch eine Pigmentzubereitung z.B. in Form einer Ink-Jet-Tintenzubereitung, welche die erfindungsgemäß verkapselten Pigmentteilchen, meist in einer wässrigen Phase, enthält.

Die erfindungsgemäßen Pigmentzubereitungen eignen sich vorzugsweise zum Bedrucken von Printmedien, insbesondere zum Bedrucken von Papier, Folien, Transparentfolien, Papieren zur Reproduktion digitaler fotografischer Aufnahmen und Graphiken sowie zum Bedrucken von Textilien. Bevorzugt zum Bedrucken von Textilien ist der Transferdruck.

Erfindungsgemäße Pigmentzubereitungen können wasserecht sein, wenn zur Umhüllung des Pigmentteilchens ein nicht wasserlösliches Polymer verwendet wird. Somit können wässrige Pigmentdispersionen mit nicht wasserlöslichen Polymeren ausgerüstet werden, die lichtecht und migrationsstabil sind.

Beim Tintenstrahldruck-Verfahren (Ink-Jet-Verfahren) wird die wässrige Farbmittelzubereitung in kleinen Tröpfchen direkt auf das Substrat gesprüht. Man unterscheidet hierbei ein kontinuierliches Verfahren, bei dem die Farbmittelzubereitung gleichmäßig durch eine Düse gepresst und durch ein elektrisches Feld, abhängig von dem zu druckenden Mustern auf das Substrat gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color, Band 19(8), S. 23-29, 1987 und Band 21(6), S. 27-32, 1989 beschrieben.

Die erfindungsgemäß verwendeten Farbmittelzubereitungen können auf alle Arten von Substratmaterialien gedruckt werden. Als Substratmaterialien seien z.B.
- cellulosehaltige Materialien wie Papier, Pappe, Karton, Holz und Holzwerkstoffe, die auch lackiert oder anderweitig beschichtet sein können,
- metallische Materialien wie Folien, Bleche oder Werkstücke aus Aluminium, Eisen, Kupfer, Silber, Gold, Zink oder Legierungen dieser Metalle, die lackiert oder anderweitig beschichtet sein können,
- silikatische Materialien wie Glas, Porzellan und Keramik, die ebenfalls beschichtet sein können,
- polymere Materialien jeder Art wie Polystyrol, Polyamide, Polyester, Polyethylen, Polypropylen, Melaminharze, Polyacrylate, Polyacrylnitril, Polyurethane, Polycarbonate, Polyvinylchlorid, Polyvinylalkohole, Polyvinylacetate, Polyvinylpyrrolidone und entsprechende Copoylmere und Blockcopolymere, biologisch abbaubare Polymere und natürliche Polymere wie Gelatine,
- textile Materialien wie Fasern, Garne, Zwirne, Maschenware, Webware, Non-wovens und konfektionierte Ware aus Polyester, modifizierten Polyester, Polyestermischgewebe, cellulosehaltigen Materialien wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Polyestermikrofasern und Glasfasergewebe,
- Leder, sowohl Naturleder als auch Kunstleder, als Glatt-, Nappa- oder Veloursleder,
genannt.

Alternativ können die durch Tintenstrahldruck erzeugten Bilder und Muster zunächst auf ein Zwischensubstrat, z.B. ein Transferbild, aufgebracht und im Kontakt mit einem zweiten Substrat, z.B. einem textilen Substrat, auf dieses übertragen werden. Dieser Prozess spielt sich häufig bei höheren Temperaturen, z.B. bei 180 bis 200 °C in einer Presse ab.

Die Fixierung des auf dem Substrat erzeugten Druckmotivs kann z.B. durch Wärmebehandlung erfolgen. Dies gelingt besonders dann, wenn zur Umhüllung der Pigmentteilchen thermoplastische Polymere mit einer Glasübergangstemperatur von -100 bis +250 °C, insbesondere von 0 bis 220 °C und ganz besonders von 20 bis 200 °C verwendet werden. Somit sind für die Fixierung nur noch relativ niedrige Temperaturen, wie sie beispielsweise durch Bügeln oder mittels anderer Wärmequelle erzeugt werden, für das Verlaufen der Polymermatrix und zur Bildung eines Farbstofffilms auf dem Substrat, z.B. einer Textilie, erforderlich.

Alternativ oder zusätzlich kann man das Druckmotiv fixieren, indem man anschließend ein Bindemittel, gewünschtenfalls in Form einer wässrigen Dispersion oder Emulsion, aufträgt und dessen Härtung herbeiführt. Man kann strahlungshärtbare, thermisch härtbare oder durch Luftoxidation trocknende Bindemittel oder physikalisch trocknende Bindemitteldispersionen oder -emulsionen einsetzen. Als Beispiele für strahlungshärtbare Bindemittel seien Acrylatgruppen-haltige, Vinylgruppen-haltige und/oder Epoxygruppen-haltige Monomere, Prepolymere, Polymere und deren Mischungen genannt.

Bei den thermisch härtbaren Bindemitteln erfolgt die Vernetzung in der Regel über Polykondensations- oder Polyadditionsreaktionen. Besonders geeignet sind z. B. durch Polykondensation vernetzende Bindemittel auf Basis von Methylolgruppen-haltigen Acrylaten.

Beispiele für lufttrocknende Bindemittel, bei denen aliphatische Doppelbindungen durch Einwirkung von Luftsauerstoff oxidativ vernetzt werden, sind trocknende Öle wie Leinöl, Holzöl und Saffloröl.

Weitere Anwendungsbeispiele für die erfindungsgemäßen Pigmentzubereitungen sind beispielsweise das Einfärben von Polymermassen wie Polyethylen (HDPE, LPPE), Polyurethan und Styrolacrylnitril.

Die Modifizierung der Pigmentteilchen durch das Umhüllen mit einem Polymer gestattet ein leichtes Einarbeiten und eine Kompatibilisierung der Pigmente mit den einzufärbenden Polymermassen.

Die nachfolgenden Beispiele sollen die Erfindung erläutern, ohne sie zu begrenzen. Die Beispiele veranschaulichen die Fällung eines in einem wassermischbaren organischen Lösungsmittel gelösten Polymers durch Vermischen mit einer wässrigen Phase.

In den Beispielen 1- 4 liegt das Pigment dispergiert in der wässrigen Phase vor. Im Beispiel 5 wird eine wässrige Pigmentdispersion unmittelbar vor dem Vermischen mit dem Rest der wässrigen Phase in die Polymerlösung eingerührt.

In den Beispielen 6 und 7 enthält die Polymerlösung das dispergierte Pigment. Im Beispiel 8 liegt das Pigment dispergiert in der wässrigen Lösung vor. Im Unterschiede zu den Beispielen 1-7, bei denen das Vermischen kontinuierlich erfolgt, veranschaulicht das Beispiel 8 eine absatzweise Durchführung des erfindungsgemäßen Verfahrens.

### Beispiel 1

Als wässrige Phase wurden 6,60 g einer wässrigen Pigmentdispersion, beinhaltend 0,66 g Pigment Blau 15:4 (BASF), 0,66 g Dispergiermittel T38909 (ethoxyliertes und sulfoniertes Bisphenol-A-Addukt von Styrol, BASF), 0,22 g Feuchthaltemittel (1,2-Propandiol, Merck) und 0,033 g Konservierungsmittel Proxcel (1,2-Benzisothiazolin-Verbindung, BASF) mit 2000 g destilliertem Wasser verdünnt, in dem 0,66 g Fluortensid (Bayowet FT 448, Bayer) gelöst waren. Als Lösungsmittelphase wurden 2 g Polycarbonat (Lexan 141, GE Plastics) und 1 g Primacor 59801 (Copolymer aus Polyethylen und Acrylsäure, DOW) in 200 g THF gelöst.

Die wässrige Phase wurde mit einer Flussrate von 507 g/min mit der Lösemittelphase, Flussrate 63,5 g/min, kontinuierlich vermischt. Anschließend zog man an einem Rotationsverdampfer bei 45 °C und 90 mbar das Lösungsmittel THF und einen Teil des Wassers ab, bis eine Feststoffkonzentration von 3,1 Gew.-% erreicht war.

Die so erhaltene wässrige Pigmentdispersion wurde mit der analytischen Ultrazentrifuge untersucht. Mit Hilfe der H₂O/D₂O-Sedimentationsanalyse wurde eine einheitliche Teilchendichte von o = 1,28 ± 0,05 g/cm³ gemessen. Somit ist ersichtlich, dass einheitliche Kern/Schale-Teilchen vorliegen, d.h. dass die Pigmentteilchen mit Polymer belegt sind. Die Teilchengröße wurde mittels Dynamischer Lichtstreuung bestimmt. Es ergab sich ein Mittelwert von 115 nm mit einer Varianz von 23 %.

### Beispiel 2

Beispiel 1 wurde wiederholt, wobei jedoch anstelle des Pigmentes Pigment Blau 15:4 die gleiche Menge Pigment Rot 122 eingesetzt wurde.

Die Flussrate für die wässrige Phase betrug 505 g/min und die Flussrate für die Lösungsmittelphase betrug 67 g/min. Die Probe wurde auf eine Feststoffkonzentration von 2,9 % aufkonzentriert. Die Teilchengröße betrug 136 nm, bei einer Varianz von 25 %.

### Beispiel 3

Beispiel 1 wurde wiederholt, wobei jedoch anstelle des Pigmentes Pigment Blau 15:4 die gleiche Menge Pigment Yellow 138 eingesetzt wurde.

Die Flussrate für die wässrige Phase betrug 491 g/min und die Flussrate für die Lösungsmittelphase betrug 70 g/min. Die Probe wurde auf eine Feststoffkonzentration von 2,5 % aufkonzentriert. Die Teilchengröße betrug 194 nm bei einer Varianz von 27 %.

### Beispiel 4

Als wässrige Phase wurden 36,6 g einer wässrigen Pigmentdispersion, beinhaltend 3,66 g Pigment Blau 15:4 (BASF), 3,66 g Dispergiermittel T38909 (ethoxyliertes und sulfoniertes Bisphenol-A-Addukt von Styrol, BASF), 1,21 g Feuchthaltemittel (1,2-Propandiol, Merck) und 0,18 g Konservierungsmittel Proxcel (1,2-Benzisothiazolin-Verbindung, BASF) mit 11000 g destilliertem Wasser verdünnt. Als Lösemittelphase löste man 23 g Terpolymer (statistisches Copolymer aus 20 % Styrol, 20 % Acrylsäure und 60 % 4-Vinylpyridin) in 1533 g saurem Methanol, bestehend aus 98 Gew.-% Methanol und 2 Gew.-% 1 M HCl.

Danach vermischte man kontinuierlich die wässrige Phase mit einer Flussrate von 510 g/min mit der Lösemittelphase, Flussrate 69 g/min. Anschließend zog man an einem Rotationsverdampfer bei 45 °C und 90 mbar Methanol und einen Teil des Wassers ab, bis eine Feststoffkonzentration von 4,0 Gew.-% errreicht war. Die mittlere Teilchengröße betrug 138 nm bei einer Varianz von 20 %.

### Beispiel 5

Als wässrige Phase wurden 0,66 g Fluortensid (Bayowet FT 448, Bayer) in 2000 g destilliertem Wasser gelöst, das mit 4 mL 1 M NaOH leicht alkalisch gestellt wurde. Die Lösungsmittelphase bestand aus einer Lösung von 2 g Polycarbonat (Lexan 141, GE Plastics) und 1 g Primacor 59801 (Copolymer aus Polyethylen und Acrylsäure, DOW) in 200 g THF. Unmittelbar vor der kontinuierlichen Vermischung von wässriger und Lösemittelphase rührte man 5 g einer wässrigen Pigmentdispersion, beinhaltend 0,5 g Pigment Blau 15:4 (BASF) und 0,5 g Dispergiermittel T38909 (ethoxyliertes und sulfoniertes Bisphenol-A-Addukt von Styrol, BASF), in die Lösemittelphase ein.

Danach vermischte man kontinuierlich die wässrige Phase mit einer Flussrate von 500 g/min mit der Lösemittelphase, Flussrate 72 g/min. Anschließend zog man an einem Rotationsverdampfer bei 45 °C und 90 mbar das Lösungsmittel THF und einen Teil des Wassers ab, bis eine Feststoffkonzentration von 4,0 Gew.-% errreicht war. Die mittlere Teilchengröße betrug 252 nm bei einer Varianz von 20 %.

### Beispiel 6

Als wässrige Phase wurden 6 g Schutzkolloid (Na-Caseinat, Lacto Bretagne Associés) und 5 g Fluortensid (Bayowet FT 448, Bayer) in 14000 g destilliertem Wasser gelöst. Man stellte den pH-Wert mit 28 mL 1 M NaOH auf 11,8 ein. Als Lösemittelphase wurden 4 g Pigment Blau 15:3 (BASF) mit 16 g Polycarbonat (Lexan 141, GE Plastics) und 8 g Primacor 59801 (Copolymer aus Polyethylen und Acrylsäure, DOW) in 1600 g THF dispergiert.

Danach vermischte man kontinuierlich die wässrige Phase mit einer Flussrate von 507 g/min mit der Lösemittelphase, Flussrate 64 g/min. Anschließend zog man an einem Rotationsverdampfer bei 45 °C und 90 mbar das Lösungsmittel THF und einen Teil des Wassers ab, bis eine Feststoffkonzentration von 7,8 Gew.-% errreicht war. Die mittlere Teilchengröße betrug 262 nm bei einer Varianz von 16 %.

### Beispiel 7

Als wässrige Phase wurden 0,66 g Fluortensid (Bayowet FT 448, Bayer) in 2000 g destilliertem Wasser gelöst, das mit 4 mL 1 M NaOH leicht alkalisch eingestellt wurde. Als Lösungsmittelphase wurden 0,5 g SiO₂-Pigment (Aerosil R 812, Degussa) mit 2 g Polycarbonat (Lexan 141, GE Plastics) und 1 g Primacor 59801 (Copolymer aus Polyethylen und Acrylsäure, DOW) in 200 g THF dispergiert.

Danach vermischte man kontinuierlich die wässrige Phase mit einer Flussrate von 495 g/min mit der Lösemittelphase, Flussrate 71 g/min. Anschließend zog man an einem Rotationsverdampfer bei 45 °C und 90 mbar das Lösungsmittel THF und einen Teil des Wassers ab, bis die Feststoffkonzentration 2,5 Gew.-% errreicht war. Die mittlere Teilchengröße betrug 122 nm bei einer Varianz von 24 %.

### Beispiel 8

Als wässrige Phase wurden 6,60 g einer wässrigen Pigmentdispersion, enthaltend 0,66 g Pigment Blau 15:4 (BASF), 0,66 g Dispergiermittel T38909 (ethoxyliertes und sulfoniertes Bisphenol-A-Addukt von Styrol, BASF), 0,22 g Feuchthaltemittel (1,2-Propandiol, Merck) und 0,033 g Konservierungsmittel Proxcel (1,2-Benzisothiazolin-Verbindung, BASF) mit 1500 g destilliertem Wasser verdünnt, in dem 0,66 g Fluortensid (Bayowet FT 448, Bayer) gelöst waren. Als Lösungsmittelphase wurden 2 g Polycarbonat (Lexan 141, Plastics) und 1 g Primacor 59801(Copolymer aus Polyethylen und Acrylsäure, DOW) in 397 g THF gelöst.

Die Lösemittelphase wurde mittels eines Tropftrichters unter Rühren während einer Zeit von 100 Minuten zugetropft.

Die wässrige Ausgangsdispersion wies eine mittlere Teilchengröße von 131 nm bei einer Varianz von 48 % auf, während nach erfolgter Polymerbelegung der Pigmentteilchen die Teilchengröße auf 157 nm anstieg bei einer Varianz von 42 %.

## Patentansprüche

1. Verfahren zur Herstellung von polymerumhüllten Pigmentteilchen, bei dem man eine Lösung eines Polymers in einem ersten Lösungsmittel mit einem fein verteilte Pigmentteilchen enthaltenden zweiten Lösungsmittel mischt, in dem das Polymer nicht oder kaum löslich ist und das mit dem ersten Lösungsmittel mischbar ist, wobei das erste Lösungsmittel unter organischen wassermischbaren Lösungsmitteln ausgewählt ist.

2. Verfahren nach Anspruch 1, wobei das zweite Lösungsmittel Wasser ist.

3. Verfahren nach einem der vorhergehenden Ansprüche, wobei das Polymer einen Polyester, ein Polyvinylacetal, Polyacetal, Polyurethan und/oder einen Polyharnstoff umfasst.

4. Verfahren nach einem der vorhergehenden Ansprüche, wobei das polymer ein Polymer aus 10 bis 100 Gew.-% eines oder mehrerer wasserunlöslicher ethylenisch ungesättigter Monomere, 0 bis 90 Gew.-% eines oder mehrerer wässerlöslicher ethylenisch ungesättigter Monomere und 0 bis 30 Gew.-% eines oder mehrerer vernetzender Monomere umfasst.

5. Verfahren nach einem der vorhergehenden Ansprüche, bei dem das erste und/oder das zweite Lösungsmittel einen Emulgator und/oder ein Schutzkolloid gelöst enthält.

6. Verfahren nach einem der vorhergehenden Ansprüche, wobei das Polymer eine Glasübergangstemperatur von -100 bis +250 °C aufweist.

7. Pigmentzubereitung, enthaltend zusammengesetzte Teilchen mit einem Pigmentteilchen der Größe 10 nm bis 500 nm und einer das Pigmentteilchen umgebenden Hülle eines Polymers.

8. Verwendung der pigmentzubereitung nach Anspruch 7, zum Bedrucken von flächenförmigen Substraten mittels Ink-Jet oder zum Einfärben von polymermassen.

## Claims

1. A process for preparing polymer-enrobed pigment particles, which comprises mixing a solution of a polymer in a first solvent with a second solvent, said second solvent containing finely divided pigment particles and being a solvent in which the polymer is substantially insoluble and which is miscible with the first solvent, wherein the first solvent is selected from organic water-miscible solvents.

2. A process as claimed in claim 1, wherein the second solvent is water.

3. A process as claimed in either preceding claim, wherein the polymer comprises a polyester, a polyvinyl acetal; polyacetal, polyurethane and/or a polyurea.

4. A process as claimed in any preceding claim, wherein the polymer comprises a polymer polymerized from 10-100% by weight of one or more water-insoluble ethylenically unsaturated monomers, 0-90% by weight of one or more water-soluble ethylenically unsaturated monomers and 0-30% by weight of one or more crosslinking monomers.

5. A process as claimed in any preceding claim, wherein the first solvent and/or the second solvent contain(s) an emulsifier and/or a protective colloid in solution.

6. A process as claimed in any preceding claim, wherein the polymer has a glass transition temperature of from -100 to +250°C.

7. A pigment preparation containing composite particles comprising a pigment particle from 10 nm to 500 nm in size and a polymer robe surrounding the pigment particle.

8. The use of the pigment preparation of claim 7 for printing sheetlike substrates by inkjet printing or for coloring polymeric compositions.

## Revendications

1. Procédé pour la préparation de particules de pigments enrobés par un polymère selon lequel on mélange une solution d'un polymère dans un premier solvant avec un deuxième solvant dans lequel le polymère est insoluble ou à peine soluble, qui est miscible avec le premier solvant et qui contient des particules de pigment à l'état de fine division, le premier solvant étant choisi parmi les solvants organiques miscibles à l'eau.

2. Procédé selon la revendication 1, selon lequel le deuxième solvant est l'eau.

3. Procédé selon l'une des revendications qui précèdent selon lequel le polymère comprends un polyester, un polyvinylacétal, un polyacétal, un polyuréthanne et/ou une polyurée.

4. Procédé selon l'une des revendications qui précèdent, selon lequel le polymère comprends un polymère de 10 à 100% en poids d'un ou plusieurs monomères à insaturation éthylénique insolubles dans l'eau, 0 à 90% en poids d'un ou plusieurs monomères à insaturation éthylénique solubles dans l'eau et 0 à 30% en poids d'un ou plusieurs monomères réticulants.

5. Procédé selon l'une des revendications qui précèdent, dans lequel le premier et/ou le deuxième solvants contiennent en solution un agent émulsionnant et/ou un colloïde protecteur.

6. Procédé selon l'une des revendications qui précèdent, dans lequel le polymère a une température de transition vitreuse allant de -100 à +250°C.

7. Composition pigmentaire contenant des particules combinées, la particule de pigment ayant une dimension de 10 nm à 500 nm et étant enrobée dans un polymère.

8. Utilisation de la composition pigmentaire selon la revendication 7 pour l'impression de supports planiformes par jet d'encre ou pour la coloration de compositions de polymères.
